# EUROPEAN PATENT SPECIFICATION

(11) **EP 4 036 676 B1**
(45) Date of publication and mention of the grant of the patent: **08.10.2025**
(21) Application number: 21203156.1
(22) Date of filing: 18.10.2021
(51) Int. Cl.: G05B 19/418

(54) **METHOD FOR OPERATING CELL BASED MOBILITY PRODUCTION SYSTEM**
VERFAHREN ZUM BETRIEB EINES ZELLENBASIERTEN MOBILITÄTSHERSTELLUNGSSYSTEMS
PROCÉDÉ DE FONCTIONNEMENT D'UN SYSTÈME DE PRODUCTION DE MOBILITÉ À BASE DE CELLULES

(30) Priority: 29.01.2021 KR 20210013528
(43) Date of publication of application: 03.08.2022
(73) Proprietor: Hyundai Motor Company, Seoul 06797 (KR); Kia Corporation, Seocho-gu Seoul 06797 (KR)
(72) Inventor: YOUN, Suk Jae, 18280 Hwaseong-si, Gyeonggi-do (KR); KIM, Sun Hoon, 18280 Hwaseong-si, Gyeonggi-do (KR)
(74) Representative: Viering, Jentschura & Partner mbB Patent- und Rechtsanwälte

(56) References cited:
- US-A- 6 141 598
- US-A1- 2009 112 343

## Description

### TECHNICAL FIELD

The present invention relates to a method for operating a cell based mobility production system.

### BACKGROUND

Embodiments of the present invention relate to a vehicle production method for preparing for the future. Conventionally, a mass production method of certain kinds of small items has been operated centering on conveyors. However, in the future society to come, industry changes are progressing around electric vehicles and it is expected that a change in customer-centric manufacturing methods is required to respond to customer needs where diversity is emphasized.

In a conventional production line, vehicles are supplied according to a consistent sequence, and a manufacturing process is performed in a consistent sequence until a finished vehicle is released. The working hours of all processes are the same, and vehicles with parts exceeding the working hours are difficult to be supplied or result in limitations in production. In other words, it is believed that there will be difficulties in responding to various customer needs in the future society while maintaining a manufacturing structure that allows only mass production of certain small items.

Therefore, it is necessary to break away from the traditional vehicle manufacturing method and to innovate a manufacturing method that can easily and quickly produce a variety of vehicles at one point.

As an example of the manufacturing method, there is a cell based smart factory. A smart factory is constituted with cell based lines. Each cell performs its own tasks, cells are variously arranged inside the factory, and the schedule of cells through which incoming vehicles pass can be easily changed.

However, in such cell based processes, the overall schedule should be well established to ensure efficiency without bottlenecks as much as possible. Therefore, it is necessary to quickly and accurately simulate this and establish a schedule in advance.

The matters described as the background are only for enhancing an understanding of the background of the present invention, and should not be taken as acknowledging that they correspond to the prior art already known to those of ordinary skill in the art.

US 2009/112343 A1 discloses a method for generation of a sequence of operations for a manufacturing process including modeling the manufacturing process through a finite state machine to create a sequence of operations generator operative to generate a list of sequences of operations for the manufacturing process and utilizing the sequence of operations generator to input process information and automatically generate a list of sequences of operations.

### SUMMARY

The present invention relates to a method for operating a cell based mobility production system. Particular embodiments relate to a method for operating a cell based mobility production system in operating a smart factory system that produces various types of mobilities with a plurality of cells connected in series or in parallel. Embodiments can achieve maximum efficiency by reducing bottlenecks, produce various vehicle types with one system, and quickly and accurately change cell layout and production plans even when vehicle types or production targets change.

In order to solve problems, embodiments of the present invention relate to a method for operating a cell based mobility production system in operating a smart factory system that produces various types of mobilities with a plurality of cells connected in series or in parallel according to claim 1. Further embodiments are described in the dependent claims. The method can achieve maximum efficiency by reducing bottlenecks, produce various vehicle types with one system, and quickly and accurately change cell layout and production plans even when vehicle types or production targets change.

### BRIEF DESCRIPTION OF THE DRAWINGS

FIG. 1 is a diagram showing a production system to which a method for operating a cell based mobility production system according to an embodiment of the present invention is applied.
FIG. 2 is a flowchart of a method for operating a cell based mobility production system according to an embodiment of the present invention.
FIG. 3 is a diagram showing a passive cell of a cell based mobility production system according to an embodiment of the present invention.
FIG. 4 is a diagram showing an automatic cell of a cell based mobility production system according to an embodiment of the present invention.
FIG. 5 is a graph showing a result when a method for operating a cell based mobility production system according to an embodiment of the present invention is applied.

### DETAILED DESCRIPTION OF ILLUSTRATIVE EMBODIMENTS

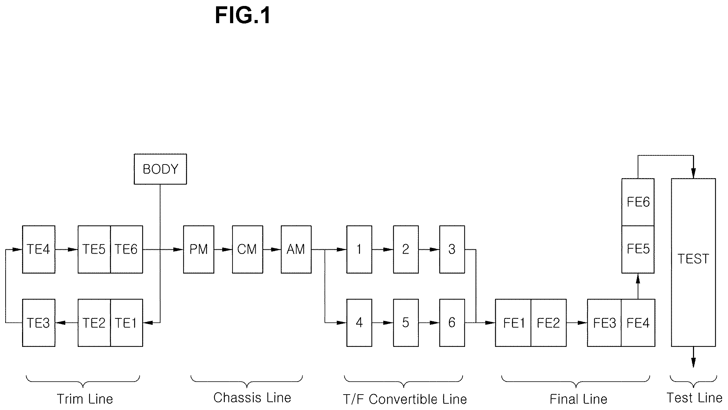

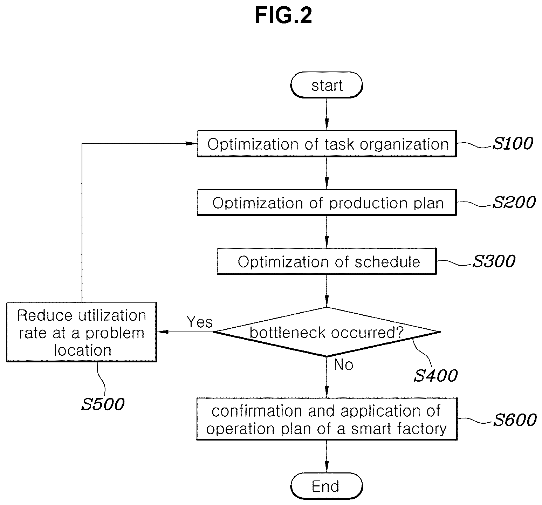

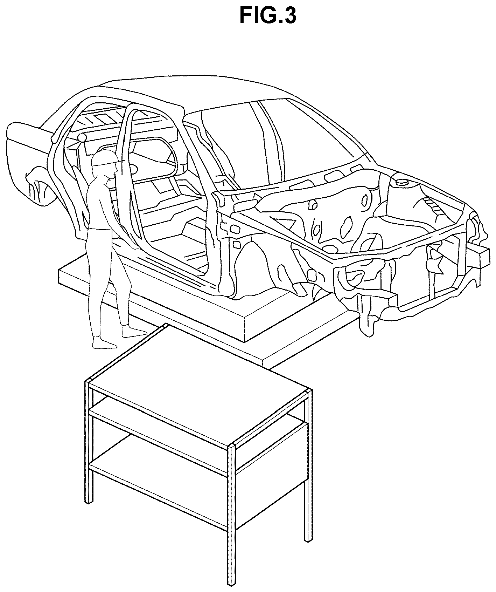

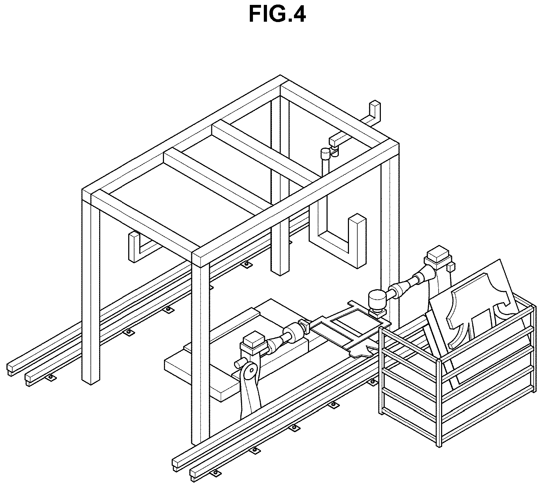

FIG. 1 is a diagram showing a production system to which a method for operating a cell based mobility production system according to an embodiment of the present invention is applied, FIG. 2 is a flowchart of a method for operating a cell based mobility production system according to an embodiment of the present invention, FIG. 3 is a diagram showing a passive cell of a cell based mobility production system according to an embodiment of the present invention, and FIG. 4 is a diagram showing an automatic cell of a cell based mobility production system according to an embodiment of the present invention.

FIG. 1 is a diagram showing a production system to which a method of operating a cell based mobility production system according to an embodiment of the present invention is applied, and shows the configuration of a cell based smart factory production system rather than a conventional conveyor method.

Embodiments of the present invention relate to a method for operating the cell based mobility production system. The embodiments of the present invention correspond to the diversity in the future society, and relate to a new production method for a configuration that is difficult to overcome with the consistent and rigid production method of a conventional technology (e.g., a conveyor production method).

With the structure of the conventional technology, it was not possible to perform the following, and thus, production could not be increased without shutting down tasks: ① after supplying the vehicles to be produced in sequence, rearranging the tasks on a production line for optimal efficiency, ② relocating the tasks in consideration of the difference in capacities that occurs between taskers, ③ relocating the working hours between production lines according to the vehicle type, ④ relocating the working hours to respond to customer customizing ordered vehicles, and ⑤ redistributing the bottleneck process. In other words, in the conventional case, reconstruction of the entire line is inevitable in order to respond to various changes in needs. However, since in the cell based system to which embodiments of the present invention are applied, it is possible to easily and quickly perform cell movement, task distribution between cells, vehicle feeding, and flow changes, it can effectively respond to various types of mobilities and changes in needs.

However, since this cell based system does not use a conveyor method, productivity may decrease if a bottleneck occurs in the middle of the manufacturing process. In order to prevent such a decrease in productivity, embodiments of the present invention simulate a production result, establish an optimal production plan, and apply it to a system, thereby enabling the production of various vehicle types and maximizing productivity at the same time.

Embodiments of the present invention relate to the operation of a system capable of achieving maximum production efficiency by optimizing resources of a production line by redistributing existing inefficient parts. In order to achieve the maximum efficiency of the production line, embodiments of the present invention enable a system to accumulate task time data in real time for each process/worker by a task completion signal for each part in real time, and to change, based on the data, task organization in real time by an optimal algorithm for optimization and efficiency. It is possible to achieve maximum production efficiency by a mathematical optimization algorithm based on vehicle/distribution transfer device (AMR), cell (manual/automatic) process, and ICT control technology.

By utilizing embodiments of the present invention, the following are possible: 1) maximum increase in production efficiency, 2) adjustment of salary according to worker capabilities (motivation), 3) prevention of production delays when a vehicle with a large amount of tasks is fed, and 4) increased production by the rearrangement of some bottleneck processes, etc. In addition, the production line can be operated in real time, and this efficient and flexible method has a great effect on improving the efficiency of various productions.

On the other hand, the cell process referred in embodiments of the present invention means an independent movable task space (cell), and may be composed of a manual cell (a worker process of FIG. 3) and an automatic cell (a robot process of FIG. 4).

FIG. 1 is a diagram showing a production system to which a method of operating a cell based mobility production system according to an embodiment of the present invention is applied. The production system to which embodiments of the present invention is applied is composed of a plurality of cells as shown. In addition, each cell is arranged in series and in parallel, thereby enabling flexible and efficient mobility production.

Examples of tasks performed in each cell are as follows.

**Table 1**

| Classificatio n | TE1 | TE2 | TE3 | TE4 | TE5 | PM | CM | AM |
|---|---|---|---|---|---|---|---|---|
| Representative tasks | door remov -al wiring plug /pad | Sunroo f PR Glass roof rack under pad | IEB brake T/ GAT E CAB | Headlinin g C/PAD Blower rear bumper | Carpet /fixed Glass /batter y | Brake Tube engin e room task under body | Chassis Decking / fastenin g | WCCU Wirin g Cable wheel guard |
| assembly MM | 746 | 315 | 738 | 325 | 330 | 705 | 300 | 713 |
| quality MM | 70 | | 69 | | | 66 | | 67 |
| TOTAL | 816 | | 807 | | | 771 | | 780 |

| T/F Convertible Cell | | | FE1 | FE2 | FE3 | FE4 | FE5 | FE6 |
|---|---|---|---|---|---|---|---|---|
| 1/4 | 2/5 | 3/6 | | | | | | |
| FRT SIDE engine room indoor trim | CTRSI DE wiring W/STR IP striker | RR SIDE T/GAT E Luggage sill side | FEM RR seat Console auxiliary battery | FRT seat FRT bumper back panel molding luggage tray | door mounting steering wheel | WS Glass tire mounting | liquid insertion key coding | FRUNK electronic product coding/ test |
| 1,429 | 706 | 1,400 | 315 | 300 | 698 | 300 | 310 | 300 |
| 134 | 66 | 132 | | | 65 | | | |
| 1,563 | 772 | 1,532 | | | 763 | | | |

As shown in the table above, TE1 to TE5 can be connected in series and form lines for assembling trim. PM to AM can be connected in series as chassis lines. In a T/F convertible, both trim and final processes are performed, and it consists of 1 to 6 cells connected in parallel. In the final line of FE1 to FE6 a finishing installation task is performed. As described above, the production system to which embodiments of the present invention is applied has a basic assembly sequence and cell arrangement.

When production output needs to be changed or improved, such as when a bottleneck needs to be removed to increase production efficiency, when a production target needs to be changed, or when production needs to be increased for specific vehicle types, it needs to change the overall task process, such as, specific cell operation, cell arrangement, or the sequence or quantity of vehicles to be fed. In this case, embodiments of the present invention establish an optimal production process with a preliminary simulation, and immediately apply it to the system for production, so that the system can be operated most efficiently.

Specifically, FIG. 2 is a flow chart of a method for operating a cell based mobility production system according to an embodiment of the present invention. The operation method of the cell based mobility production system according to embodiments of the present invention operates a system for producing various types of mobilities with a plurality of cells connected in series or in parallel by a controller. The method includes arranging a certain task for each cell in consideration of a mobility production target and a deviation of utilization rate between cells (S100), setting a sequence of the cells through which a vehicle body matched for a type of mobility passes in consideration of the task arranged for each cell (S200), and determining a feeding sequence of each type of vehicle body in consideration of the sequence of the cells through which each type of vehicle body passes (S300).

A cell based system has the advantage of being able to produce a variety of vehicle types on one line. However, if there is a large difference in capacities between workers, there is a large difference in the amount of work between vehicles, there is a large variety of vehicle types, or a bottleneck occurs, overall productivity may be degraded.

Therefore, when the first production begins, when a vehicle type or a production target is changed, or when an excessive bottleneck occurs, the entire process is simulated, evaluated, and changed according to the sequence of FIG. 2 in order to establish the production process to be changed. By applying it to the system, the system can produce mobilities according to the changed operation plan.

To this end, the controller of the mobility production system collects various data, updates the operation plan, and controls the production of the system accordingly. A controller according to an exemplary embodiment of the present invention can be implemented with an algorithm configured to control the operations of various components of the system or a nonvolatile memory (not shown) configured to store data related to software commands for reproducing the algorithm, and a processor (not shown) configured to perform the operations described below using the data stored in the memory. Here, the memory and the processor may be implemented as separate chips. Alternatively, the memory and processor may be implemented as a single chip integrated with each other, and the processor may be in the form of one or more processors.

The controller needs to collect various data. The data may be data of tasks performed in each cell or target data that needs to be produced in the future.

First, a step of arranging a necessary task to each cell is performed in consideration of a mobility production target and the deviation of utilization rate between cells. The system of embodiments of the present invention is provided with a plurality of cells, and the types of various tasks to be performed on each cell are defined. In order to establish an operational plan, it is necessary to determine the kind of task that should be performed on each cell. Further, the criterion for such determination may be the production target and the minimizing of the deviation of utilization rate between cells.

An optimization process can be conducted for this task arrangement. The optimization process analyzes the actual work time data of all cells in terms of production efficiency, and optimizes the organization so that all cells have the same work time. Thus, it achieves the same efficiency as in the conveyor production method. Specifically, if a cell process requires excessive work completion time compared to the actual work time data of the entire cell, a task that can be moved to another cell can be selected and the reorganization can be conducted so that it can be changed to a cell process with less work completion time. Accordingly, it is reorganized so that the work time of the entire cell process is as similar as possible.

Further, it is possible to optimize the organization so that the maximum production is increased by changing the automatic process organization of the bottleneck process. In this case, it is possible to increase the production by organization change of some parts of the automated process to a manual process.

When the organization is changed by this process, it is linked to automatically change the task information/logistics information. The table below shows the tasks that can be organized to move to another cell and the tasks that cannot be organized to move to another cell, among the tasks performed in the TE1 process.

**Table 2**

| **Task Organization of TE1 Manual Process** | | |
|---|---|---|
| Task name | TE1 manual only | Possibility of organization change |
| Brake Pedal | • | - |
| CTR/RR FLR Pad | • | - |
| Curtain Airbag Module | • | - |
| FRT Seat Belt | - | • |
| 2ND Seat Belt | - | • |
| Buckle | - | • |
| FLR Wiring (driver seat) | - | • |
| FLR Wiring (passenger seat) | - | • |
| FLR Wiring (B pillar bottom) | - | • |
| Main Wiring | • | - |
| Roof Wiring | • | - |

In the step (S100) of arranging a necessary task for each cell, an optimization algorithm is used. In this case, task organization is performed for each process so that the utilization rate for each cell is leveled based on various production scenarios, and the optimal solution for all cases is derived in a short time through mathematical optimization modeling. The determinant variable of this modeling can be whether or not to arrange a specific task in the process, the objective function can be the leveling of the utilization rate for each cell for each demand scenario, and constraints can include a process that can be arranged for each task, a preceding and following relationship for each task, a task required at the same time, and satisfaction of a production target for each demand scenario, etc.

That is, in the step (S100) of arranging a necessary task for each cell, a necessary task may be placed for each cell such that a mobility production target meets required production and a deviation of utilization rate between cells is minimized. In addition, a necessary task can be arranged for each cell in consideration of the preceding and following relationship for each task, a necessary task can be arranged for each cell in consideration of tasks to be performed at the same time, and a necessary task can be arranged for each cell in consideration of the capability and incapability of a cell in which the task can be arranged.

Specifically, a plurality of predicted schedules in which tasks are arranged for each cell is generated. Among the plurality of predicted schedules, a predicted schedule that the mobility production target meets the required production and the deviation of the utilization rate between cells is to be minimized can be selected as an optimal schedule.

As shown in the table below, the time required for each task, a list of cells available for the task, and the data of a pre-task to be performed before the task is required.

**Table 3**

| **Task Information** | | | |
|---|---|---|---|
| Task | Task time | Available cell | Pre-task |
| task#1 | 60 | A, B, C | - |
| task#2 | 1 | A | - |
| task#3 | 28 | B, C | 2 |
| task#4 | 12 | C | 3 |

For the cell arrangement, the cell arrangement of Table 1 cited above can be used. By applying these data to the optimization modeling, the task organization for each demand scenario is derived as follows.

**Table 4**

| **Derived optimal organization - Exploring the number of all cases using a mathematical optimal solution objective function: production (deviation of utilization rate)** | | | | |
|---|---|---|---|---|
| organization | cell organization | demand scenario 1 | demand scenario 2 | demand scenario 3 |
| organization#1 dissatisfaction of target demand | TE1:1, 2, 3 | 136 (0.1) | 124 (0.3) | 136 (0.15) |
| | TE2:4, 5 | | | |
| | ... | | | |
| organization#2 optimal solution | T1:2, 3, 8 | 136 (0.2) | 136 (0.2) | 136 (0.1) |
| | T2:1, 5 | | | |
| | ... | | | |
| organization#3 | T1:1, 5, 8 | 136 (0.3) | 136 (0.3) | 136 (0.4) |
| | T2:4, 5 | | | |
| | ... | | | |

As shown above, for demand scenarios 1, 2, and 3, the production and the deviation of utilization rate derived from each organization is simulated and derived. As a result, the production of scenario 1 is less than the production of scenario 2 so that scenario 2 is not selected. Organization 2 is selected as an optimal organization because in scenario 2, the production is superior to the other scenarios, and the deviation of the utilization rates between cells is the smallest.

Thereafter, in consideration of the tasks arranged for each cell, the step (S200) of determining the sequence of cells through which a vehicle body matched for each mobility type pass is performed. In this step, the number of the vehicle bodies matched for each mobility to be processed for each cell is determined, the number of the vehicle bodies matched for each mobility body and moving between cells is determined, and the sequence of cells through which each vehicle body passes is determined. In addition, it is possible to determine the sequence of the cells though which each vehicle body passes such that the required production for each mobility type is satisfied and the moving distance of the vehicle bodies between the cells is minimized. In consideration of the maximum work time of each cell, the type of task that can be performed in each cell, and the preceding and following relationship between tasks, the sequence of the cells through which each vehicle body passes can be determined.

Thus, a modeling is used, an optimal production plan is derived to meet the production target, and an optimal solution is derived in a short time through a mathematical optimization modeling.

The determinant variable of the modeling is the number of vehicle bodies for each mobility type, each process, and each cell, and the number of vehicle bodies moving between cells for each mobility type and each process. An objective function is to maximize the demand satisfaction and to minimize the moving distance. The constraints can be the maximum work hours for each cell, a process that can be performed for each cell, and a sequence for each process.

As a result, in the process of FIG. 1, when a total of 136 units are required to be assembled, 136 units are allotted in serial lines, and, in T/F CONVERTIBLE line which is parallel line, 70 units are allotted in processes 1,2,3, and 66 units are allotted in processes 4,5, 6.

Accordingly, it is possible to plan a cell route which each vehicle body has to travel as follows.

**Table 5**

| Vehicle body | Vehicle information | Cell movement route |
|---|---|---|
| vehicle body#1 | vehicle type1-Spec. 1 | 1→..→9→10→11→12→... |
| vehicle body#2 | vehicle type1-Spec. 1 | 1→...→9→13→14→15→... |
| vehicle body#3 | vehicle type2-Spec. 1 | 1→...→9→13→14→15→... |

After that, in consideration of the sequence of cells though which each vehicle body passes, the step (S300) of determining a feeding sequence for each type of vehicle body is performed.

In this case, a plurality of predicted schedules, each predicted schedule different from each other with respect to the feeding sequence of vehicle body, is set, and the predicted schedule with the shortest total work hours among the predicted schedules may be selected as the optimal schedule. In addition, a plurality of predicted schedules, each predicted schedule different from each other with respect to the feeding sequence of the vehicle body, is set, and the predicted schedule with the shortest waiting hours between the fed vehicle bodies may be selected as the optimal schedule.

In addition, it is possible to determine the feeding sequence for each type of vehicle body in consideration of the moving hours and work hours for each vehicle body, the types of task available in each cell, and the preceding and following relationship between the tasks.

In this step, the optimal feeding sequence and feeding time are derived from the production plan, and the optimal solution can be derived in a short time through the mathematical optimization modeling.

The determinant variables of modeling may be the feeding sequence and feeding time for each vehicle body, and the objective function can be to minimize the waiting time for each vehicle body and to minimize the task completion time for all vehicle bodies. Constraints may include moving time of each vehicle body, task time, satisfaction of schedule such as work hours, prohibition of simultaneous cell work, and restrictions on available AMR time.

Accordingly, the following are the derived predicted schedules, and the optimal schedule can be selected among them.

**Table 6**

| **Derived optimal schedule** | | | |
|---|---|---|---|
| | Schedule | Feeding sequence of vehicle body | Objective formula Total completion time, Waiting time |
| | schedule#1 | 1→3→10→4→2→5→9→11→... | 600min, avg.12min |
| Dissatisfaction | schedule#2 | 3→1→2→4→9→6→12→24→... | 701min, avg.omin |
| | schedule#3 | 22→1→30→14→2→7→8→... | 664min, avg.2min |
| | schedule#4 | 14→2→4→9→15→16→19→... | 611min, avg.9min |
| | schedule#5 | 8→7→2→14→20→1→3→5→... | 589min, avg.24min |
| Optimal solution | schedule#6 | 5→3→10→4→2→11→8→... | 589min, avg.10min |
| | schedule#7 | 10→31→1→4→2→8→7→5→... | 602min, avg.7min |

As shown in the table above, among schedules 1 to 7, schedule 6 can be selected as the optimal schedule because the overall completion time and the waiting time between processes are short.

Then, when the vehicle body is fed according to a feeding sequence, a cell with excessive utilization rate is detected. A feedback for reducing the utilization rate of the detected cell is performed, and a step (S400) of reperforming preceding operations from the step of arranging a necessary task for each cell is conducted. In other words, unlike simulation, in reality, an unpredictable bottleneck may occur in feeding vehicle bodies and during the assembly process, and in this case, a feedback for reducing the utilization rate of a cell where the bottleneck is occurring can be performed, and the process of reestablishing a schedule may be performed (S500).

In this case, for a cell with a 100% utilization rate, it can be determined as an excessive utilization rate. In the case of a cell with an excessive utilization rate, after limiting the maximum utilization rate, it can be performed again from the step of arranging a necessary task for each cell.

For example, in the following case, the utilization rate of cell 2 is 100%, and it is considered that a bottleneck occurs in cell 2. Therefore, the feedback is conducted and process is reestablished.

**Table 7**

| Cell | Utilization rate | Bottleneck occurrence | Maximum allowable utilization rate |
|---|---|---|---|
| cell#1 | 95 | - | 100 |
| cell#2 | 100 | v | 100→95 |
| cell#3 | 88 | - | 100 |
| cell#4 | 92 | - | 100 |

In this case, the maximum utilization rate of cell 2 is limited to 95% and the optimization of task organization is reperformed, thereby fundamentally blocking the possibility that a bottleneck occurs in cell 2 in the actual process. Therefore, by eliminating the bottleneck period in real time, the maximum productivity can be maintained during assembly (S600).

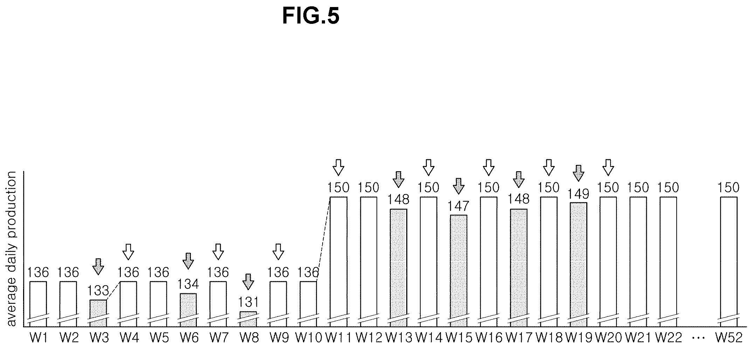

FIG. 5 is a graph showing a result when an operation method of the cell based mobility production system according to an embodiment of the present invention is applied. As shown, the production decline occurs on day 3, but when the production plan is established or modified according to embodiments of the present invention and the same is applied, the production recovers on day 4. In addition, it can be seen that even when the production target is suddenly increased, such as on day 11, the production plan can be modified or established according to embodiments of the present invention and the same is applied so that the production can be increased immediately on day 11.

According to the method for operating a cell based mobility production system of embodiments of the present invention, in operating a smart factory system that produces various types of mobilities with a plurality of cells connected in series or in parallel, the method can achieve maximum efficiency by reducing bottlenecks, produce various vehicle types with one system, and quickly and accurately change cell layout and production plans even when vehicle types or production targets change.

Although shown and described in relation to specific embodiments of the present invention, it will be obvious to a person of ordinary knowledge in the art that the present invention can be variously improved and changed within the scope of the present invention provided by the following claims.

## Claims

1. A method for operating by a controller a cell based mobility production system which produces various kinds of mobilities with a plurality of cells connected in series or in parallel, the method comprising:
arranging a necessary task for each cell by determining an optimal solution through mathematical optimization modeling with an objective function of leveling an utilization rate for each cell for each demand scenario of a plurality of demand scenarios , by performing a task organization for each process of the plurality of cells and in consideration of a mobility production target, a deviation of utilization rate between the cells, a preceding and following relationship for each task, tasks that have to be performed at a same time and a task that can be performed for each cell and a task that cannot be performed for each cell;
setting a sequence of the cells through which a vehicle body matched for a type of mobility passes by an optimal solution derived through a mathematical optimization modelling such that a required production for each mobility type is satisfied and a moving distance of the vehicle bodies between the cells is minimized in consideration of the tasks arranged for each cell, of maximum work time of each cell, a type of task that is performed in each cell, and the preceding and following relationship between tasks; and
in consideration of the sequence of the cells through which each type of vehicle body passes, determining a feeding sequence of each type of vehicle body by an optimal solution derived through a mathematical optimization modelling for feeding sequence and feeding time in consideration of a moving time and a work time for each type of vehicle body, the type of tasks performed in each cell, and the preceding and following relationship between tasks.

2. The method of claim 1, wherein a plurality of predicted schedules in which tasks are arranged for each cell is generated by the controller and among the generated plurality of predicted schedules, the arranging the necessary task for each cell is performed by being configured to select a predicted schedule in which the mobility production target meets the mobility production target and the deviation of utilization rate between the cells is minimized, as an optimal schedule.

3. The method of one of claims 1-2, wherein setting the sequence of the cells is performed by determining a number of each type of vehicle body to be performed for each cell, and determining a number of each type of vehicle body moving between the cells.

4. The method of one of claims 1-3, wherein in determining the feeding sequence of each type of vehicle body, a plurality of predicted schedules in which the feeding sequence of each type of vehicle body is different from each other is set, and, among the plurality of predicted schedules, the feeding sequence of each type of vehicle body is further determined by being configured to select the predicted schedule with a shortest work time is selected as an optimal schedule.

5. The method of one of claims 1-4, wherein in determining the feeding sequence of each type of vehicle body, a plurality of predicted schedules in which the feeding sequence of each type of vehicle body is different from each other is set, and, among the plurality of predicted schedules, the feeding sequence of each type of vehicle body is further determined by being configured to select the predicted schedule with a shortest waiting time between the vehicle bodies to be fed as an optimal schedule.

6. The method of claim 1, further comprising:
detecting a cell with an excessive utilization rate when feeding the vehicle body according to the feeding sequence;
re-performing the method from the step of arranging the necessary task for each cell after limiting the maximum utilization rate of the detected cell;

7. The method of claim 6, wherein, determining a cell having a utilization rate of 100% as the cell with the excessive utilization rate.

## Patentansprüche

1. Verfahren zum Betreiben, mittels einer Steuereinrichtung, eines zellenbasierten Mobilitätsproduktionssystems, das verschiedene Arten von Mobilitäten mit einer Mehrzahl von in Reihe oder parallel verbundenen Zellen erzeugt, wobei das Verfahren aufweist:
Anordnen einer erforderlichen Aufgabe für jede Zelle durch Ermitteln einer optimalen Lösung durch mathematische Optimierungsmodellierung mit einer Zielfunktion zum Ausgleichen einer Auslastungsrate für jede Zelle für jedes Nachfrageszenario einer Mehrzahl von Nachfrageszenarien, durch Ausführen einer Aufgabenorganisation für jeden Prozess der Mehrzahl von Zellen und unter Berücksichtigung eines Mobilitätsproduktionsziels, einer Abweichung der Auslastungsrate zwischen den Zellen, einer vorhergehenden und einer nachfolgenden Beziehung für jede Aufgabe, Aufgaben, die gleichzeitig ausgeführt werden müssen, und einer Aufgabe, die für jede Zelle ausgeführt werden kann, und einer Aufgabe, die nicht für jede Zelle ausgeführt werden kann,
Festlegen einer Reihenfolge der Zellen, durch die eine für einen Mobilitätstyp passende Fahrzeugkarosserie hindurchfährt, anhand einer optimalen Lösung, die durch mathematische Optimierungsmodellierung abgeleitet wird, so dass eine erforderliche Produktion für jeden Mobilitätstyp erfüllt wird und eine Bewegungsdistanz der Fahrzeugkarosserien zwischen den Zellen minimiert wird, unter Berücksichtigung der für jede Zelle angeordneten Aufgaben, einer maximalen Arbeitszeit jeder Zelle, eines in jeder Zelle ausgeführten Aufgabentyps und der vorangehenden und nachfolgenden Beziehung zwischen den Aufgaben, und
unter Berücksichtigung der Reihenfolge der Zellen, durch die jeder Fahrzeugkarosserietyp hindurchfährt, Ermitteln einer Zuführreihenfolge jedes Fahrzeugkarosserietyps durch eine optimale Lösung, die durch eine mathematische Optimierungsmodellierung für die Zuführreihenfolge und die Zuführzeit unter Berücksichtigung einer Fahrzeit und einer Arbeitszeit für jeden Fahrzeugkarosserietyp, dem Typ der in jeder Zelle ausgeführten Aufgaben und der vorangehenden und nachfolgenden Beziehung zwischen Aufgaben abgeleitet wird.

2. Verfahren gemäß Anspruch 1, wobei eine Mehrzahl von vorhergesagten Zeitplänen, in denen Aufgaben für jede Zelle angeordnet sind, durch die Steuereinrichtung erzeugt wird und unter der erzeugten Mehrzahl von vorhergesagten Zeitplänen das Anordnen der erforderlichen Aufgabe für jede Zelle durchgeführt wird durch ein derartiges Konfigurieren, dass ein vorhergesagter Zeitplan, in dem das Mobilitätsproduktionsziel das Mobilitätsproduktionsziel erfüllt und die Abweichung der Auslastungsrate zwischen den Zellen minimiert ist, als optimaler Zeitplan ausgewählt wird.

3. Verfahren gemäß einem der Ansprüche 1 bis 2, wobei das Festlegen der Reihenfolge der Zellen durchgeführt wird durch Ermitteln einer Anzahl jedes Fahrzeugkarosserietyps, der für jede Zelle auszuführen ist, und Ermitteln einer Anzahl jedes Fahrzeugkarosserietyps, der sich zwischen den Zellen bewegt.

4. Verfahren gemäß einem der Ansprüche 1 bis 3, wobei beim Ermitteln der Zuführreihenfolge jedes Fahrzeugkarosserietyps eine Mehrzahl von vorhergesagten Zeitplänen festgelegt wird, in denen die Zuführreihenfolge jedes Fahrzeugkarosserietyps voneinander unterschiedlich ist, und wobei unter der Mehrzahl von vorhergesagten Zeitplänen die Zuführreihenfolge jedes Fahrzeugkarosserietyps ferner ermittelt wird durch ein derartiges Konfigurieren, dass der vorhergesagte Zeitplan mit einer kürzesten Arbeitszeit als optimaler Zeitplan ausgewählt wird.

5. Verfahren gemäß einem der Ansprüche 1 bis 4, wobei beim Ermitteln der Zuführreihenfolge für jeden Fahrzeugkarosserietyp eine Mehrzahl von vorhergesagten Zeitplänen festgelegt wird, in denen die Zuführreihenfolge für jeden Fahrzeugkarosserietyp voneinander unterschiedlich ist, und wobei unter der Mehrzahl von vorhergesagten Zeitplänen die Zuführreihenfolge für jeden Fahrzeugkarosserietyp ferner ermittelt wird durch ein derartiges Konfigurieren, dass der vorhergesagte Zeitplan mit einer kürzesten Wartezeit zwischen den zuzuführenden Fahrzeugkarosserien als optimaler Zeitplan ausgewählt wird.

6. Verfahren gemäß Anspruch 1, ferner aufweisend:
Detektieren einer Zelle mit einer übermäßigen Auslastungsrate beim Zuführen der Fahrzeugkarosserie gemäß der Zuführreihenfolge,
erneutes Ausführen des Verfahrens ab dem Schritt des Anordnens der erforderlichen Aufgabe für jede Zelle nach dem Begrenzen der maximalen Auslastungsrate der detektierten Zelle.

7. Verfahren gemäß Anspruch 6, wobei eine Zelle mit einer Auslastungsrate von 100 % als die Zelle mit der übermäßigen Auslastungsrate ermittelt wird.

## Revendications

1. Procédé pour faire fonctionner, par un contrôleur, un système de production de mobilité à base de cellules qui produit divers types de mobilités avec une pluralité de cellules connectées en série ou en parallèle, le procédé comprenant :
l'agencement d'une tâche nécessaire pour chaque cellule en déterminant une solution optimale par modélisation mathématique d'optimisation avec une fonction objective de nivellement d'un taux d'utilisation pour chaque cellule pour chaque scénario de demande d'une pluralité de scénarios de demande, en effectuant une organisation de tâches pour chaque processus de la pluralité de cellules et en tenant compte d'une cible de production de mobilité, d'un écart de taux d'utilisation entre les cellules, d'une relation précédente et suivante pour chaque tâche, de tâches qui doivent être effectuées en même temps et d'une tâche qui peut être effectuée pour chaque cellule et d'une tâche qui ne peut pas être effectuée pour chaque cellule ;
la définition d'une séquence des cellules par lesquelles passe une carrosserie de véhicule adaptée à un type de mobilité par une solution optimale dérivée moyennant une modélisation mathématique d'optimisation de manière à satisfaire une production requise pour chaque type de mobilité et à minimiser une distance de déplacement des carrosseries de véhicule entre les cellules en tenant compte des tâches agencées pour chaque cellule, du temps de travail maximal de chaque cellule, d'un type de tâche qui est exécutée dans chaque cellule, et de la relation précédente et suivante entre les tâches, et
en tenant compte de la séquence des cellules par lesquelles passe chaque type de carrosserie de véhicule, la détermination d'une séquence d'alimentation de chaque type de carrosserie de véhicule par une solution optimale dérivée moyennant une modélisation mathématique d'optimisation pour la séquence d'alimentation et le temps d'alimentation en tenant compte d'un temps de déplacement et d'un temps de travail pour chaque type de carrosserie de véhicule, du type de tâches effectuées dans chaque cellule et de la relation précédente et suivante entre les tâches.

2. Procédé selon la revendication 1, dans lequel une pluralité de programmes prévus dans lesquels des tâches sont agencées pour chaque cellule sont générés par le contrôleur et, parmi la pluralité de programmes prévus générés, l'agencement de la tâche nécessaire pour chaque cellule est effectué en étant configuré pour sélectionner un programme prévu dans lequel l'objectif de production de mobilité satisfait l'objectif de production de mobilité et l'écart de taux d'utilisation entre les cellules est minimisé, en tant que programme optimal.

3. Procédé selon l'une des revendications 1 à 2, dans lequel la définition de la séquence des cellules est effectuée en déterminant un nombre de chaque type de carrosserie de véhicule à effectuer pour chaque cellule, et en déterminant un nombre de chaque type de carrosserie de véhicule se déplaçant entre les cellules.

4. Procédé selon l'une des revendications 1 à 3, dans lequel, lors de la détermination de la séquence d'alimentation de chaque type de carrosserie de véhicule, une pluralité de programmes prédits dans lesquels la séquence d'alimentation de chaque type de carrosserie de véhicule est différente les uns des autres est définie, et, parmi la pluralité de programmes prédits, la séquence d'alimentation de chaque type de carrosserie de véhicule est en outre déterminée en étant configurée pour sélectionner le programme prédit ayant un temps de travail le plus court comme programme optimal.

5. Procédé selon l'une des revendications 1 à 4, dans lequel, lors de la détermination de la séquence d'alimentation de chaque type de carrosserie de véhicule, une pluralité de programmes prévus dans lesquels la séquence d'alimentation de chaque type de carrosserie de véhicule est différente les uns des autres est définie, et, parmi la pluralité de programmes prévus, la séquence d'alimentation de chaque type de carrosserie de véhicule est en outre déterminée en étant configurée pour sélectionner le programme prévu avec un temps d'attente le plus court entre les carrosseries de véhicule à alimenter en tant que programme optimal.

6. Procédé selon la revendication 1, comprenant en outre :
la détection d'une cellule ayant un taux d'utilisation excessif lors de l'alimentation de la carrosserie de véhicule selon la séquence d'alimentation ;
la réexécution du procédé à partir de l'étape consistant à agencer la tâche nécessaire pour chaque cellule après avoir limité le taux d'utilisation maximal de la cellule détectée.

7. Procédé selon la revendication 6, dans lequel on détermine une cellule ayant un taux d'utilisation de 100 % comme étant la cellule ayant le taux d'utilisation excessif.
